# DEMANDE DE BREVET EUROPEEN

(11) **EP 1 477 287 A2**
(43) Date de publication de la demande: **17.11.2004**
(21) Numéro de dépôt: 04075392.3
(22) Date de dépôt: 22.04.2002
(51) Int. Cl.: B29C 45/06

(54) **Presse d'injection pour pièces moulées en élastomère**

(30) Priorité: 07.05.2001 FR 0106074
(62) Demande divisionnaire de: 02291015.2
(71) Demandeur: HUTCHINSON, 75008 Paris (FR)
(72) Inventeur: Chasles, Jean-Pierre, 28220 Cloyes sur le Loir (FR); Vasseur, Alain, 28200 Chateaudun (FR); Vanhille, Patrick, 45190 Beaugency (FR); Blot, Philippe, 28220 St-Hilaire sur Yerre (FR)
(74) Mandataire: Burbaud, Eric

(57) **Abrégé**

Presse d'injection comprenant un premier plateau inférieur (5) mobile selon un axe vertical central (Z), un deuxième plateaux (4) sensiblement parallèle, un dispositif de moulage (7) comportant au moins deux moules (13) et un barillet (9) rotatif situé entre les plateaux (4,5), qui porte les moules, un dispositif d'injection (14), un dispositif de chauffage (37), et un dispositif de commande adapté pour déplacer les plateaux (5, 4). Le barillet (9) est monté librement coulissant sur un arbre (8) disposé selon l'axe central (Z), qui comporte une butée (11) limitant le coulissement vers le bas du barillet. Le premier plateau (5) est déplaçable entre une position de fermeture dans laquelle les plateaux serrent les moules qui se trouvent à un poste autre que le poste de démoulage, et une position d'ouverture dans laquelle le barillet (9) est en appui sur la butée (11) et pour laquelle les moules (13) ne sont pas en contact avec les plateaux (5,4).

## Description

La présente invention est relative aux presses d'injection pour pièces moulées en élastomère.

Plus particulièrement, l'invention concerne une presse d'injection pour pièces moulées en élastomère, comprenant :
- des premier et deuxième plateaux sensiblement parallèles déplaçables l'un par rapport à l'autre en coulissement selon un axe central sensiblement vertical, entre d'une part, une position de fermeture où lesdits premier et deuxième plateaux sont à une première distance l'un de l'autre, et d'autre part, une position d'ouverture où lesdits premier et deuxième plateaux sont écartés l'un de l'autre jusqu'à une deuxième distance supérieure à ladite première distance,
- un dispositif de moulage comportant au moins deux moules qui comprennent eux-mêmes deux portions de moule déplaçables l'une par rapport à l'autre selon ledit axe central entre d'une part, une position fermée où lesdites deux portions de moule sont en contact jointif pour permettre de mouler au moins une pièce en élastomère, et d'autre part, une position ouverte permettant le démoulage de ladite pièce en élastomère, ledit dispositif de moulage étant disposé entre les premier et deuxième plateaux,
- un dispositif d'injection adapté pour injecter de l'élastomère dans le moule,
- au moins un dispositif de chauffage adapté pour chauffer l'élastomère contenu dans les moules pour le vulcaniser,
- et un dispositif de commande comprenant au moins un vérin adapté pour déplacer les premier et deuxième plateaux entre leurs positions d'ouverture et de fermeture.

Les presses connues de ce type ne permettent qu'un démoulage simultané de l'ensemble des empreintes, après l'injection et la vulcanisation de l'ensemble des pièces en élastomère moulées dans les empreintes du dispositif de moulage. Ces presses ont donc un cycle de fonctionnement assez long, compte tenu du fait que la vulcanisation peut durer quelques minutes. Pour compenser ce handicap, le dispositif de moulage comporte généralement un grand nombre d'empreintes (par exemple 16 empreintes) pour permettre d'obtenir une cadence de production assez élevée.

Ces presses connues donnent satisfaction quant à l'efficacité de la fermeture du dispositif de moulage et quant à leur compacité.

Elles présentent toutefois les inconvénients suivants :
- leur dispositif d'injection d'élastomère est particulièrement coûteux, dans la mesure où il doit être capable de remplir simultanément un grand nombre d'empreintes,
- leur dispositif d'injection ne sert qu'une faible fraction du temps, donc est faiblement rentabilisé, ce qui est d'autant plus gênant qu'il s'agit d'un appareillage coûteux, comme indiqué ci-dessus,
- et comme le dispositif de moulage comporte un grand nombre d'empreintes, ces empreintes sont reliées au dispositif d'injection par une longueur relativement grande de canaux d'alimentation, d'où des pertes importantes de matière lors du moulage : en effet, l'élastomère présent dans ces canaux vulcanise lui aussi lors de la vulcanisation des pièces moulées, et le caoutchouc vulcanisé présent dans les canaux en fin de moulage ne peut être recyclé,
- et du fait de la grande longueur des canaux d'alimentation, l'élastomère doit être injecté à une température relativement basse pour éviter qu'il ne commence à vulcaniser dans les canaux avant d'avoir rempli les empreintes : il en résulte une vulcanisation plus lente, puisqu'un chauffage plus long est nécessaire dans les empreintes.

Par ailleurs, on connaît du document FR-A-1453413 une presse d'injection comprenant un plateau supérieur fixe et horizontal, ainsi qu'un barillet mobile en rotation qui supporte des moules. Une partie réduite de la portion inférieure des moules traverse des ouvertures correspondantes du barillet, de sorte que cette partie est accessible depuis la face inférieure du barillet. Pour fermer les moules, cette presse comporte sous chaque station d'injection et de vulcanisation un vérin qui vient en prise avec la partie accessible de la portion inférieur des moules et soulève celle-ci, afin de serrer les portions inférieure et supérieure des moules respectivement entre l'extrémité supérieure de chacun des vérins et le plateau supérieur. Bien que cette réalisation permette une libre rotation du barillet lorsque tous les vérins sont abaissés, elle est complexe et coûteuse du fait du grand nombre de vérins nécessaire et de la puissance de commande exigée pour les vérins.

La présente invention a notamment pour but de pallier ces inconvénients, en proposant une presse qui assure de manière simple et efficace la fermeture des moules, tout en permettant un déplacement par rotation des moules sans entrave.

A cet effet, selon l'invention, une presse d'injection du genre en question est caractérisée :
- en ce que le dispositif de moulage comporte un barillet qui porte un nombre n au moins égal à 2 de moules indépendants, ces moules étant déplaçables par rotation du barillet, entre un nombre p de postes fixes, p étant au moins égal à n, et ces postes comprenant au moins un poste d'injection et un poste de démoulage, ledit barillet étant monté librement coulissant sur un arbre disposé selon l'axe central, qui comporte une butée limitant le coulissement vers le bas du barillet,
- et en ce qu'au moins le premier plateau, situé sous le barillet, est déplaçable entre la position de fermeture dans laquelle les premier et deuxième plateaux serrent l'une contre l'autre en position fermée les deux portions de moule de chaque moule qui se trouve à un poste autre que le poste de démoulage, et la position d'ouverture dans laquelle le barillet est en appui sur la butée de l'arbre et pour laquelle les moules ne sont pas en contact avec les premier et deuxième plateaux.

Grâce à ces dispositions, lorsqu'on fait passer successivement chaque moule sur les différents postes de la presse d'injection, il n'y a pas de frottement entre les moules les plateaux. Lors de chacun de ces mouvements, on démoule la ou les pièces d'élastomère du moule qui se trouve au poste de démoulage.

La fermeture de l'ensemble des moules, en dehors de celui présent au poste de démoulage, est simultanée et commandée par un nombre réduit de vérins.

On peut ainsi obtenir des cadences de production assez élevées sans qu'il soit nécessaire d'utiliser des moules ayant de nombreuses empreintes.

De plus, on peut donc utiliser un dispositif d'injection d'élastomère peu coûteux. On peut également limiter la longueur des canaux d'alimentation des empreintes dans les moules, ce qui d'une part, permet de limiter les pertes de matière, et d'autre part, permet d'injecter l'élastomère a une température plus élevée, d'où une vulcanisation plus rapide.

On notera que le deuxième plateau peut venir en contact avec une surface importante du moule, ce qui permet de répartir de manière homogène la pression exercée sur le moule par le premier plateau et d'augmenter la surface d'échange thermique entre ceux-ci.

Enfin, le dispositif d'injection des presses selon l'invention est utilisé pendant une large fraction du temps, donc est bien rentabilisé.

Dans des modes de réalisation préférés de l'invention, on peut éventuellement avoir recours en outre à l'une et/ou à l'autre des dispositions suivantes :
- le dispositif de commande est adapté pour cycliquement :
   . abaisser le premier plateau, le barillet étant en appui sur la butée et les moules n'étant pas en contact avec les premier et deuxième plateaux ;
   . faire tourner le barillet pour faire passer les moules d'un poste à l'autre ; puis
   . relever ledit premier plateau vers le deuxième plateau, lesdits premier et deuxième plateaux serrant l'une contre l'autre en position fermée les deux portions de moule de chaque moule qui se trouve à un poste autre que le poste de démoulage ;
- les premier et deuxième plateaux sont fixes en rotation autour de l'axe central et au moins l'un des premier et deuxième plateaux présente une échancrure en correspondance avec le poste de démoulage pour permettre l'ouverture du moule se trouvant audit poste de démoulage lorsque lesdits premier et deuxième plateaux sont dans leur position de fermeture ;
- le premier plateau est monté coulissant sur des colonnes périphériques parallèles à l'arbre et disposées autour du barillet ;
- le deuxième plateau est solidaire d'un bâti fixe ;
- au moins certains des dispositifs de chauffage comprennent une surface chauffante solidaire d'un desdits premier et deuxième plateaux ;
- chaque moule comporte une portion de moule supérieure et une portion de moule inférieure, et le poste de démoulage comporte un dispositif d'ouverture de moule adapté pour soulever la portion de moule supérieure en la séparant de la portion de moule inférieure ;
- la portion de moule inférieure comporte des rebords d'appui adaptés pour prendre appui sur le barillet.
- chaque portion de moule comporte une carcasse externe fixée au barillet et une empreinte qui est supportée par ladite carcasse et qui présente une forme intérieure complémentaire de la pièce en élastomère à mouler ;
- le dispositif de commande comprend au moins des premier et deuxième vérins, le premier vérin étant disposé en correspondance avec le poste d'injection et le deuxième vérin étant diamétralement opposé au premier vérin par rapport à l'axe central.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective d'une presse d'injection selon une forme de réalisation de l'invention,
- la figure 2 est une vue en coupe verticale de la presse de la figure 1,
- la figure 3 est une vue en perspective d'un barillet porte-moules appartenant à la presse de la figure 1,
- la figure 4 est une vue schématique partielle de la presse de la figure 1, en perspective,
- la figure 5 est une vue schématique de dessus illustrant les différents postes de la presse de la figure 1,
- et la figure 6 est une vue en coupe verticale illustrant un mode de réalisation des moules de la presse de la figure 1.

Sur les différentes figures, les mêmes références désignent des éléments identiques ou similaires.

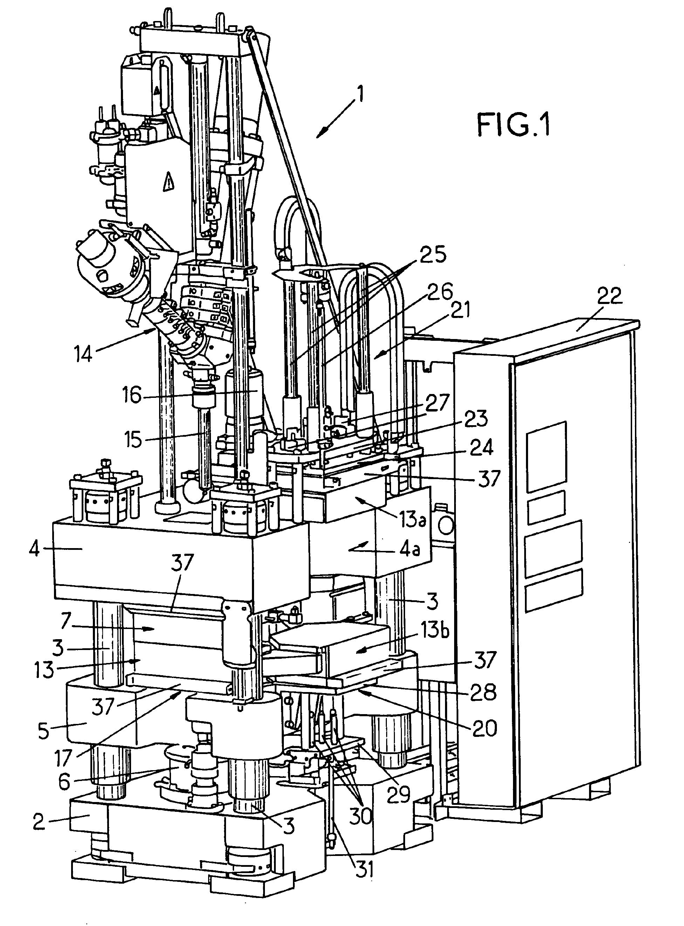

La figure 1 représente une presse d'injection 1 pour caoutchouc ou matériaux élastomères similaires, selon une forme de réalisation de l'invention.

Cette presse d'injection comporte un bâti fixe comprenant :
- un socle 2 fixé au sol,
- quatre colonnes cylindriques verticales 3 fixées sur le socle 2,
- et un plateau supérieur fixe 4 horizontal, fixé sur les colonnes 3.

Par ailleurs, la presse d'injection comporte en outre un plateau inférieur mobile 5 horizontal qui est disposé entre le socle 2 et le plateau fixe 4 et qui est monté coulissant verticalement sur les colonnes 3. Le plateau mobile 5 est déplaçable vers le haut jusqu'à une position dite de fermeture, et vers le bas jusqu'à une position dite d'ouverture, au moyen de deux vérins hydrauliques 6 interposés entre ledit plateau mobile et le socle 2.

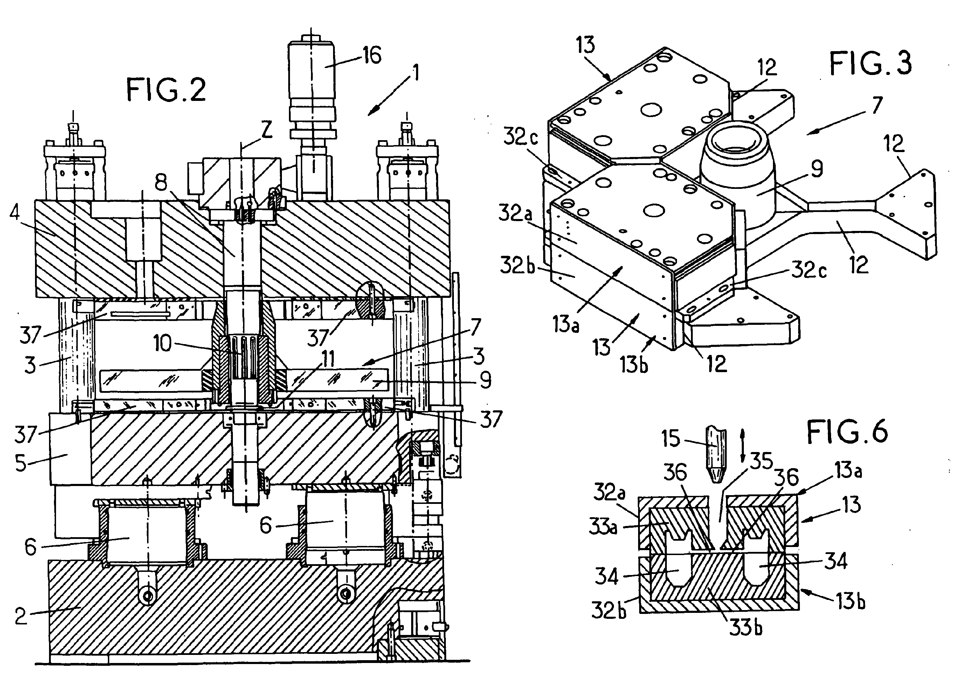

Par ailleurs, un dispositif de moulage 7, s'étendant sensiblement horizontalement, est interposé entre le plateau mobile 5 et le plateau fixe 4. Ce dispositif de moulage est monté rotatif entre les colonnes 3, autour d'un axe vertical Z, au moyen d'un arbre d'entraînement vertical 8 qui est bien visible sur la figure 2.

Cet arbre 8 supporte un barillet porte-moule 9 qui est solidarisé en rotation avec ledit arbre 8 au moyen de cannelures axiales 10 de l'arbre 8 qui sont emboîtées dans des cannelures complémentaires du barillet 9.

De plus, le barillet 9 peut coulisser verticalement sur une certaine distance par rapport à l'arbre 8. Ce coulissement est limité par une butée telle qu'un collet 11 solidaire de l'arbre 8 et disposé sons le barillet 9.

Comme représenté sur la figure 3, le barillet 9 présente plusieurs échancrures 12 ouvertes radialement vers l'extérieur et adaptées pour recevoir chacune un moule 13. Dans l'exemple représenté, le barillet 9 comporte quatre échancrures 12 disposées a 90° les unes par rapport aux autres et est par conséquent adapté pour porter quatre moules 13, mais l'invention s'appliquerait à une presse d'injection dont le barillet 9 serait adapté pour porter au moins deux moules 13 et le cas échéant jusqu'à six voire huit moules 13.

Chacun de ces moules 13 comporte une portion de moule supérieure 13a et une portion de moule inférieure 13b, séparables l'une de l'autre pour ouvrir le moule et démouler les pièces en élastomère qui ont été formées dans le moule.

Par ailleurs, comme représenté sur la figure 1, la presse d'injection comporte en outre :
- une tête d'injection de caoutchouc 14, terminée par une buse d'injection 15 déplaçable verticalement (seule au avec l'ensemble de la tête 14),
   - un moteur 16 entraînant l'arbre 8 pour faire tourner le dispositif de moulage 7 autour de l'axe Z, de façon à pouvoir positionner séquentiellement chaque moule 13 successivement au niveau d'un poste d'injection 17 situé sous la tête d'injection 14, de deux postes de vulcanisation 18, 19 et d'un poste de démoulage 20 (voir figure 5),
   - un dispositif d'ouverture de moule 21 situé au niveau du poste de démoulage 20,
   - et une armoire de commande 22 comprenant par exemple un automate programmable qui commande l'ensemble de la presse d'injection.

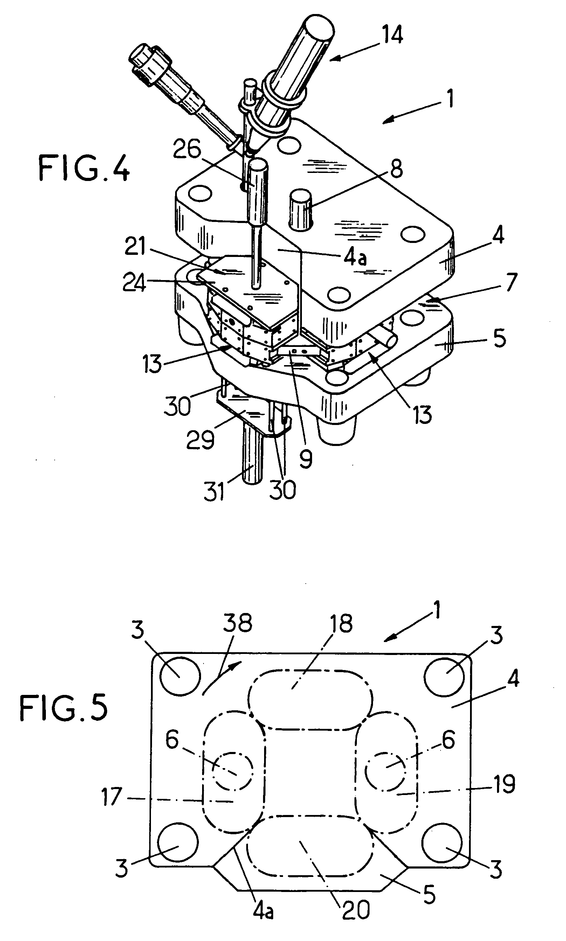

Comme représenté plus en détail sur les figures 1 et 4, le plateau supérieur fixe 4 peut avantageusement comporter une échancrure 4a présentant une forme complémentaire des moules 13, de façon à permettre le coulissement vertical de la portion supérieure 13a d'un moule au travers de ladite échancrure.

De plus, le dispositif d'ouverture de moule 21 peut comporter par exemple :
- une plaque supérieure fixe 23 montée à une certaine distance au-dessus du plateau supérieur 4,
- un plateau mobile 24 monté coulissant verticalement par rapport à la plaque fixe 23 au moyen de trois colonnes de guidage 25 et commandé par un vérin 26,
- et deux vérins de verrouillage 27 portés par le plateau mobile 24 et adaptés pour verrouiller la portion supérieure 13a d'un moule sous ce plateau mobile, ces vérins de verrouillage 27 pouvant être par exemple des vérins type "quart de tour", par exemple des vérins commercialisés sous la marque « CYTRAC » par la société CITEC, France.

Par ailleurs, au niveau du poste de démoulage 20, le plateau mobile 5 comporte une plaque de support 28 disposée au-dessus d'une plaque inférieure mobile 29 qui porte des tiges d'actionnement 30 en saillie vers le haut.

Cette plaque mobile 29 est déplaçable verticalement au moyen d'un vérin 31 de façon à faire pénétrer les tiges 30 dans des évidements (non représentés) de la plaque de support 28 et de la portion inférieure 13b du moule situé au poste de démoulage. Ces tiges 30 peuvent ainsi actionner des éjecteurs (non représentés, mais connus en soi) compris dans la portion inférieure 13b du moule pour éjecter la ou les pièces en élastomère formée(s) dans le moule 13 qui se trouve au poste de démoulage.

Comme on peut le voir en particulier sur les figures 1 et 2, des plaques chauffantes 37 sont fixées sous le plateau supérieur fixe 4, sous le plateau supérieur mobile 24, sur le plateau inférieur mobile 5 et sur la plaque de support 28, respectivement aux emplacements des quatre postes fixes 17-20 susmentionnés. Ces plaques chauffantes 37 sont chauffées électriquement en permanence, de sorte que, lorsque le plateau inférieur 5 est relevé en position de fermeture par les vérins hydrauliques 6, lesdites plaques chauffantes communiquent leur chaleur aux moules 13 en permettant la vulcanisation du caoutchouc cru précédemment injecté dans ces moules.

Enfin, comme représenté sur la figure 6, la portion supérieure 13a et la portion inférieure 13b de chaque moule 13 se composent de préférence de deux parties :
- une carcasse extérieure, respectivement 32a, 32b, de forme standard, qui est adaptée pour être supportée par le barillet 9,
- et une empreinte intérieure, respectivement 33a, 33b, qui est conformée pour mouler la ou les pièces en élastomère dans une on plusieurs cavités de moulage 34 (en pratique, 1 à 4 cavités de moulage).

Ainsi, on peut réutiliser les carcasses 32a, 32b quelles que soient les pièces moulées dans la presse d'injection, et lorsqu'on change le type de pièces fabriquées au moyen de ladite presse d'injection, on remplace uniquement les empreintes 33a, 33b à l'intérieur des carcasses 32a, 32b.

On notera que la carcasse inférieure 32b peut, par exemple, comporter des rebords d'appui 32c adaptés pour venir en appui sur ledit barillet 9. Comme cela est visible sur la figure 3, les rebords 32c comporte des ouvertures oblongues permettant de fixer le demi-moule inférieur 13b au barillet 9 à l'aide de boulons, non représentés, qui sont vissés dans des trous taraudés également visibles sur la figure 3.

Comme on peut le voir sur la figure 6, la carcasse supérieure 32a et l'empreinte supérieure 33a délimitent avantageusement un canal vertical 35 adapté pour recevoir la buse d'injection 15 de la tête 14, ce canal vertical 35 débouchant dans la au les cavités de moulage 34 du moule 13 par l'intermédiaire de canaux horizontaux 36.

La presse d'injection qui vient d'être décrite fonctionne comme suit : à intervalles de temps réguliers, par exemple compris entre quelques secondes et quelques dizaines de secondes, le plateau inférieur mobile 5 est abaissé par les vérins 6, de sorte que le barillet 9 portant les moules 13 vient reposer sur le collet 11 de l'arbre 8 : lorsque le plateau 5 a été suffisamment abaissé, le dispositif de moulage 7 n'est donc plus du tout en contact avec des parties fixes de la presse.

L'automate programmable contenu dans l'armoire 22 fait lors tourner le moteur 16 qui entraîne en rotation l'arbre 8 et le barillet 9 sur un quart de tour dans le sens de la flèche 38 représentée sur la figure 5. On notera que l'entraînement du barillet 9 par l'arbre 8 permet de disposer le moteur d'entraînement 16 sur le plateau supérieur 4, et par conséquent de limiter la surface au sol occupée par la presse.

Le moule vide 13 qui se trouvait précédemment au niveau du poste de démoulage 20 vient alors se positionner au niveau du poste d'injection 17, tandis que les moules 13 dont les empreintes sont remplies de caoutchouc et qui se trouvaient précédemment au niveau des postes 17-19 se retrouvent respectivement au niveau des postes 18-20.

On notera que cette rotation s'effectue aisément, puisque les moules 13 ne frottent sur aucune partie fixe.

On notera également qu'au cours de la rotation du dispositif de moulage 7, chacun des moules 13 peut bailler ou s'ouvrir légèrement, ce qui n'est pas gênant et peut même permettre le cas échéant un dégazage de ces moules. Le cas échéant, s'il s'avérait souhaitable de maintenir les moules 13 hermétiquement fermés même dans la position d'ouverture du plateau mobile 5, il serait possible de prévoir un dispositif de verrouillage (non représenté) entre la portion supérieure 13a et la portion inférieure 13b de chaque moule.

Après la rotation du dispositif de moulage 7, le plateau mobile 5 est à nouveau relevé au moyen des vérins hydrauliques 6, qui sont avantageusement situés respectivement en correspondance avec les postes d'injection 17 et de vulcanisation 19.

Le barillet librement coulissant à mouvement perdu sur l'arbre 8, accompagne et guide le mouvement des moules 13 vers le plateau supérieur fixe 4.

On referme ainsi hermétiquement les moules 13 situés an poste d'injection 17 et aux postes de vulcanisation 18, 19 par serrage entre les plateaux 4 et 5. Ces moules 13 sont alors chauffés par les plaques chauffantes 37, de sorte que les moules 13 sont maintenus à bonne température pour permettre la vulcanisation du caoutchouc (pendant les périodes d'ouverture de la presse, l'inertie thermique des moules 13 permet à ces moules de rester à bonne température pour continuer la vulcanisation du caoutchouc).

Une fois le plateau 5 en position de fermeture, la buse d'injection 15 abaissée de façon a pénétrer dans le canal 35 du moule 13 situé au niveau du poste d'injection 17 (voir figure 6), de sorte que la ou les cavités de moulage 34 de ce moule 13 sont remplies de caoutchouc cru qui commence alors à vulcaniser sous l'effet de la température du moule 13 considéré.

Pendant ce temps, les moules 13 remplis de caoutchouc qui sont situés au niveau des postes de vulcanisation 18, 19 continuent leur processus de vulcanisation.

Enfin, dans le même temps, le plateau mobile 24 du dispositif de démoulage est appliqué sur la portion supérieure 13a du moule 13 situé au poste de démoulage 20, et les vérins de verrouillage 27 sont actionnés pour solidariser ladite portion supérieure 13a du moule avec le plateau mobile 24, après quoi ledit plateau mobile 24 est relevé au moyen du vérin 26 en passant dans l'échancrure 4a du plateau supérieur fixe 4.

De plus, la plaque inférieure mobile 29 est alors relevée au moyen du vérin 31, de sorte que les tiges supérieures 30 solidaires de ce plateau 29 pénètrent dans la portion inférieure 13b du moule au travers de la plaque de support 28, ce qui provoque le démoulage de la ou des pièces en élastomère initialement contenues dans le moule 13 situé au poste de démoulage 20.

La ou les pièces ainsi démoulées sont ensuite enlevées manuellement ou par des moyens automatiques (non représentés), après quoi la plaque inférieure 29 est à nouveau abaissée et le plateau mobile 24 est lui-même abaissé de façon à déposer la portion supérieure 13a du moule sur la portion inférieure 13b. Les vérins de verrouillage 27 sont ensuite actionnés pour libérer ladite portion supérieure 13a du moule, puis le plateau 24 est à nouveau relevé.

On notera qu'au cours de ces manipulations, les portions supérieure 13a et inférieure 13b du moule situées an niveau du poste de démoulage 20 continuent a être maintenues en température par les plaques chauffantes 37 situées au niveau de ce poste de démoulage.

Par la suite, la presse 1 renouvelle cycliquement les séquences décrites précédemment, de façon à mouler d'autres pièces en élastomère.

## Revendications

1. Presse d'injection pour pièces moulées en élastomère, comprenant :
- des premier et deuxième plateaux (5, 4) sensiblement parallèles déplaçables l'un par rapport à l'autre en coulissement selon un axe central (Z) sensiblement vertical, entre d'une part, une position de fermeture où lesdits premier et deuxième plateaux sont à une première distance l'un de l'autre, et d'autre part, une position d'ouverture où lesdits premier et deuxième plateaux sont écartés l'un de l'autre jusqu'à une deuxième distance supérieure à ladite première distance,
- un dispositif de moulage (7) comportant au moins deux moules (13) qui comprennent eux-mêmes deux portions de moule (13a, 13b) déplaçables l'une par rapport à l'autre selon ledit axe central (Z) entre d'une part, une position fermée où lesdites deux portions de moule sont en contact jointif pour permettre de mouler au moins une pièce en élastomère, et d'autre part, une position ouverte permettant le démoulage de ladite pièce en élastomère, ledit dispositif de moulage étant disposé entre les premier et deuxième plateaux,
- un dispositif d'injection (14) adapté pour injecter de l'élastomère dans les moules (13),
- au moins un dispositif de chauffage (37) adapté pour chauffer l'élastomère contenu dans le moule (13) pour le vulcaniser,
- et un dispositif de commande comprenant au moins un vérin (6) adapté pour déplacer les premier et deuxième plateaux (5, 4) entre leurs positions d'ouverture et de fermeture,
**caractérisée en ce que** le dispositif de moulage (7) comporte un barillet (9) qui porte un nombre n au moins égal à 2 de moules indépendants (13), ces moules étant déplaçables par rotation du barillet, entre un nombre p de postes fixes (17-20), p étant au moins égal à n, et ces postes comprenant au moins un poste d'injection (17) et un poste de démoulage (20), ledit barillet (9) étant monté librement coulissant sur un arbre (8) disposé selon l'axe central (Z), qui comporte une butée (11) limitant le coulissement vers le bas du barillet (9),
et **en ce qu'**au moins le premier plateau (5), situé sous le barillet (9), est déplaçable entre la position de fermeture dans laquelle les premier et deuxième plateaux (5, 4) serrent l'une contre l'autre en position fermée les deux portions de moule (13a, 13b) de chaque moule qui se trouve à un poste (17-19) autre que le poste de démoulage (20), et la position d'ouverture dans laquelle le barillet (9) est en appui sur la butée (11) de l'arbre (8) et pour laquelle les moules (13) ne sont pas en contact avec les premier et deuxième plateaux (5,4).

2. Presse d'injection selon la revendication 1, dans laquelle le dispositif de commande est adapté pour cycliquement :
- abaisser le premier plateau (5), le barillet étant en appui sur la butée (11) et les moules (13) n'étant pas en contact avec les premier et deuxième plateaux (5, 4) ;
- faire tourner le barillet (9) pour faire passer les moules (13) d'un poste à l'autre ; puis
- relever ledit premier plateau (5) vers le deuxième plateau (4), lesdits premier et deuxième plateaux serrant l'une contre l'autre en position fermée les deux portions de moule (13a, 13b) de chaque moule (13) qui se trouve à un poste (17, 19) autre que le poste de démoulage.

3. Presse d'injection selon la revendication 1, ou la revendication 2 dans laquelle les premier et deuxième plateaux (4, 5) sont fixes en rotation autour de l'axe central (Z) et au moins l'un (4) des premier et deuxième plateaux présente une échancrure (4a) en correspondance avec le poste de démoulage (20) pour permettre l'ouverture du moule (13) se trouvant audit poste de démoulage lorsque lesdits premier et deuxième plateaux (5, 4) sont dans leur position de fermeture.

4. Presse d'injection selon l'une quelconque des revendications précédentes, dans laquelle le premier plateau (5) est monté coulissant sur des colonnes périphériques (3) parallèles à l'arbre (8) et disposées autour du barillet (9).

5. Presse d'injection selon l'une quelconque des revendications précédentes, dans laquelle le deuxième plateau (4) est solidaire d'un bâti fixe (2).

6. Presse d'injection selon l'une quelconque des revendications précédentes, dans laquelle au moins certains des dispositifs de chauffage comprennent une surface chauffante (37) solidaire d'un desdits premier et deuxième plateaux (5,4).

7. Presse d'injection selon l'une quelconque des revendications précédentes, dans laquelle chaque moule (13) comporte une portion de moule supérieure (13a) et une portion de moule inférieure (13b), et le poste de démoulage (20) comporte un dispositif d'ouverture de moule (21) adapté pour soulever la portion de moule supérieure en la séparant de la portion de moule inférieure.

8. Presse d'injection selon la revendication 7, dans laquelle la portion de moule inférieure (13b) comporte des rebords d'appui (32c) adaptés pour prendre appui sur le barillet (9).

9. Presse d'injection selon l'une quelconque des revendications précédentes, dans laquelle chaque portion de moule (13a, 13b) comporte une carcasse externe (32a, 32b) fixée au barillet et une empreinte (33a, 33b) qui est supportée par ladite carcasse et qui présente une forme intérieure (34) complémentaire de la pièce en élastomère à mouler.

10. Presse d'injection selon l'une quelconque des revendications précédentes, dans laquelle le dispositif de commande comprend au moins des premier et deuxième vérins (6), le premier vérin étant disposé en correspondance avec le poste d'injection (17) et le deuxième vérin étant diamétralement opposé au premier vérin par rapport à l'axe central (Z).
